Europäisches Patentamt

European Patent Office

Office européen des brevets

(19)

(11) Numéro de publication: **0 109 377**
**A2**

(12) # DEMANDE DE BREVET EUROPEEN

(21) Numéro de dépôt: **83870120.9**

(51) Int. Cl.³: **F 24 J 3/02**

(22) Date de dépôt: **14.11.83**

(30) Priorité: **16.11.82 BE 895008**
**28.10.83 BE 211789**

(71) Demandeur: **Rockx, Chantal, 225, Avenue des Croix de Feu, B-1020 Bruxelles (BE)**
Demandeur: **Becart, Michel, 25, rue Adolphe Renard, B-1060 Bruxelles (BE)**

(43) Date de publication de la demande: **23.05.84**
**Bulletin 84/21**

(72) Inventeur: **Rockx, Chantal, 225, Avenue des Croix de Feu, B-1020 Bruxelles (BE)**
Inventeur: **Becart, Michel, 25, rue Adolphe Renard, B-1060 Bruxelles (BE)**

(84) Etats contractants désignés: **DE FR GB SE**

(74) Mandataire: **Kellens, Georges E., c/o BUGNION S.A. rue de Namur 43 -Bte 3, B-1000 Bruxelles (BE)**

(54) **Capteur solaire.**

(57) Le capteur d'énergie solaire est constitué par deux faces principales par des parois (1, 2) en verre naturel ou réfractaire ou autre matériau transparent synthétique formant avec un encadrement (4) un caisson (3) hermétique dont la chambre intérieure (5) est remplie d'un liquide spécial statique (6) en mesure de capter, absorber et stocker des calories.

EP 0 109 377 A2

— 1 —

## Capteur solaire

Le capteur d'énergie solaire, objet de la présente invention, est constitué sur ses deux faces principales par des parois en verre naturel ou réfractaire ou autre matériau transparent synthétique formant avec un encadrement, un caisson hermétique dont la chambre intérieure est remplie par un liquide spécial, statique et transparent.

Les capteurs actuellement connus, du type caisson, comportent une face orientée vers la lumière du jour et la chaleur solaire cette face étant généralement réalisée au moyen d'une plaque de verre ou d'un verre synthétique laissant passer la lumière ou la chaleur solaire dans le caisson et frappant une paroi en fond de caisson généralement noire et absorbante mais de toute façon non transparente dont les propriétés permettent le captage des calories et de réchauffer de ce fait un circuit d'eau ou d'air circulant à l'intérieur du caisson et dans des conduits alimentant l'habitat en eau ou air chaud.

0109377

- 2 -

Ces capteurs ne sont donc pas conçus pour capter la chaleur en provenance de l'habitat et de la redistribuer vers celui-ci ce qui en limite fortement l'utilisation pendant les périodes d'ensolleilement réduit.

Le capteur objet de la présente invention modifie complètement les capacités des capteurs actuellement connus par le fait qu'il est constitué entièrement par des parois en verre naturel ou réfractaire formant un caisson hermétique après que la chambre intérieure ait été remplie par un liquide spécial, statique et transparent de telle sorte que le caisson et le liquide forment ensemble un capteur totalement transparent par les deux faces. De ce fait ce capteur laissera donc passer la lumière naturelle vers l'habitat ou inversément la lumière artificielle de l'habitat vers l'extérieur. Le liquide spécial statique et transparent contenu dans la chambre intérieure du caisson hermétique constitue lui un élément en mesure de capter, d'absorber, de stocker les calories tant en provenance de l'extérieur de l'habitat que celles en provenance de l'intérieur de celui-ci de telle sorte qu'il double sa capacité de stockage de calories et qu'il gardera ces calories même si les sources de chaleur externe ou interne disparaissent en les redistribuant lentement vers l'habitat lorsque la température ambiante de celui-ci diminuera.

Le liquide spécial statique constitué des éléments

0109377

- 3 -

non dégradable pourra fonctionner pendant des décennies en résistant aux attaques des chimiques, des acides, des hydrocarbures, du calcaire véhiculés par l'air ou l'eau. Le caisson sera de plus ignifuge, résistant aux hautes et basses températures tout en maintenant intactes les capacités de transparence, de captage, de stockage et de redistribution de calories vers l'habitat.

Le capteur pourra être utilisé comme survitrage placé derrière les vitres de l'habitat tout en assurant la transparence au travers de la vitre et en assumant ses fonctions de capteur.

Le capteur pourra être réalisé au moyen de trois parois vitrées, formant deux caissons et disposant de deux chambres intérieures hermétiques et non communicantes, l'une contenant le liquide spécial statique et transparent, l'autre pouvant contenir de l'air sec ou être mise sous vide. Dans ce cas, ce capteur transparent pourra être placé dans un châssis de fenêtre, de porte, de coupole, d'élément de verandas, de serre, etc. Dans ce cas il complétera ses qualités de transparences, de captage, de stockage, et de redistribution des calories vers l'habitat par le fait qu'il constituera en plus une barrière très importante contre les bruits venant de l'extérieur. Il diminuera fortement les risques de déperdition de la chaleur intérieure vers l'extérieur et la pénétration de l'air froid de l'exté-

0109377

- 4 -

rieur vers l'intérieur. Il supprimera l'existence de points froids généralement constatés dans les châssis en aluminium et ce sans nuire à son bon fonctionnement de capteur.

Le liquide spécial et transparent pourra toutefois être colorié, pigmenté ou rendu opaque par modification de la composition du liquide spécial statique sans perdre de ce fait ces capacités de capter, stocker et redistribuer les calories et pourra de ce fait être utilisé comme panneaux décoratifs placés à l'intérieur comme à l'extérieur de l'habitat étant entendu que dans ce cas il perdrait sa capacité de transparence. Ce capteur utilisé comme plafond, sous plafond, revêtement de plateforme, pourra stocker les calories qui s'élèvent vers le haut des pièces et être redistribuée lorsque la température ambiante diminuera. Ce capteur suivant l'épaisseur du caisson en verre prévue et le volume du liquide spécial statique utilisé pourra produire des matériaux tels que des briques, des carreaux, des dalles, des cloisons, des éléments de toitures, tuiles, etc. de telle sorte qu'un habitat ou autres bâtiments communautaire, administratif, commercial ou industriel seront fortement isolés phoniquement, thermiquement tout en disposant d'une énorme capacité de stockage de calories et de redistribution de celles-ci. Ce capteur plongé dans une cuve contenant de l'eau et agissant seul ou placé en batterie placé sur un habitat ou en dehors d'un habitat sera en mesure de stocker des calories permettant le réchauffement de la cuve

- 5 -

qui par circulation pourra alimenter l'habitat ou
un ensemble d'habitats même après que l'action solaire aura disparue.

Afin de mieux comprendre l'invention et d'en faire
ressortir les caractéristiques, on va la décrire
maintenant de manière exemplative et non limitative
par rapport à un dessin annexé qui représente schématiquement :

à la figure 1, une vue générale d'un caisson selon
l'invention;

à la figure 2, une vue en coupe selon la ligne I/I
dans le caisson représenté à la figure 1;

à la figure 3, une vue identique à celle de la figure 2 mais dans une variante de réalisation selon
l'invention;

à la figure 4, une vue dans un dispositif utilisant
plusieurs caissons selon l'invention.

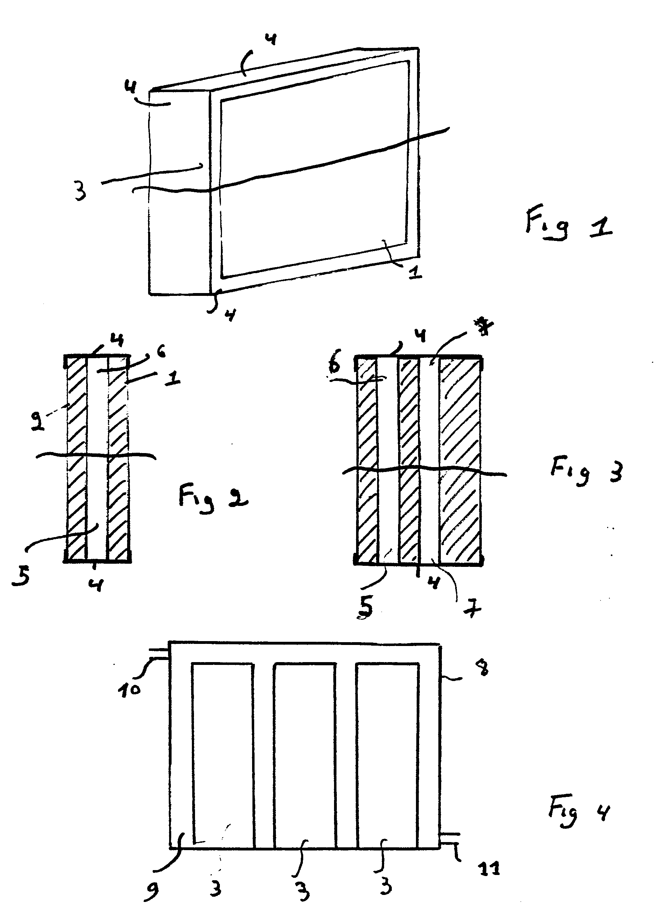

En se référant à ces différentes figures, on a représenté par (1) une paroi avant en verre et par (2)
une paroi arrière en verre du caisson (3), par (4)
l'encadrement, par (5) une chambre intérieure au
caisson (3) qui va contenir le liquide spécial,
statique, transparent (6), chambre intérieure (5)
que l'on va rendre hermétique après y avoir introduit le liquide (6), par (7) une deuxième chambre
intérieure (voir figure 3), non communiquante avec
la première chambre (5), contenant de l'air sec
ou mise sous vide et rendue ensuite hermétique et
par (8) une cuve immergée d'eau (9); il peut s'agir

- 6 -

d'un autre liquide ou gaz porteur, dans laquelle sont plongés plusieurs caissons (3); il peut y en avoir un ou plusieurs placés par exemple en batterie. Par (10) une tuyauterie d'amenée de l'eau à rechauffer; par (11) la tuyauterie de sortie de l'eau rechauffée.

De manière préférentielle lorsque le caisson (3) est utilisé comme paroi d'un bâtiment et par exemple fenêtre, porte-fenêtre, etc., la paroi de verre (1) placée du côté extérieur au bâtiment sera plus épaisse que la paroi (2) placée du côté intérieur du bâtiment, de manière à favoriser la sortie des calories vers l'intérieur du bâtiment et non l'inverse.

Le caisson (3) peut être utilisé comme tel ou encore à titre préférentielle, comme survitrage; les compositions suivantes de liquide sont prévues, compositions pouvant varier selon la région pour laquelle est destiné le capteur, à titre de formule pour pays à climat tempéré :

| | | |
|---|---|---|
| soit a. Monoethylène Glycol stabilisé | de 32 à 50 % | |
| eau distillée | de 67 à 49 % | |
| acide formique | $\frac{1}{2}$ % | |
| ammonium quaternaire | $\frac{1}{2}$ % | |
| soit b. Glycerol stabilisé | de 32 à 50 % | |
| eau distillée | de 67 à 49 % | |
| acide formique | $\frac{1}{2}$ % | |
| ammonium quaternaire | $\frac{1}{2}$ % | |

0109377

- 7 -

pour climat froid

soit a. Paraffine pure (huile)          100 %

soit b. huile de silicone pure          100 %

pour climat très chaud

eau distillée                            84 %

acide citrique                           14 %

ammonium quaternaire                      1 %

acide formique                            1 %.

L'on ne sortirait pas du cadre de cette invention en y apportant des modifications notamment en variant légèrement les proportions dans les mélanges ou produits utilisés comme liquide statique ou encore en ayant recours à des produits analogues.

D'autre part, par exemple en lieu et place d'un encadrement métallique (4) ou autre matière, on peut prévoir un joint hermétique en toute matière convenable sur tout le périmètre des deux parois, on peut également prévoir à la fois un encadrement et un joint.

0109377

- 8 -

Revendications

1. Capteur d'énergie solaire caractérisé en ce qu'il est constitué par deux faces principales par des parois (1, 2) en verre naturel ou réfractaire ou autre matériau transparent synthétique formant avec un encadrement (4) un caisson (3) hermétique dont la chambre intérieure (5) est remplie d'un liquide spécial statique (6) en mesure de capter, absorber et stocker des calories.

2. Capteur selon la revendication 1, caractérisé en ce qu'il est constitué par un caisson comportant deux chambres (5, 7) intérieures hermétiques, la première (5) contenant le liquide statique (6), l'autre (7) contenant de l'air sec ou étant mise sous vide.

3. Capteur selon l'une quelconque des revendications 1 à 3, caractérisé en ce qu'une des deux parois (1, 2) du caisson est plus épaisse que l'autre.

4. Capteur selon l'une quelconque des revendications 1 à 4, caractérisé en ce que le liquide spécial est constitué soit par un mélange composé de 32 à 50 % de monoethylène glycol stabilisé, 67 à 49 % d'eau distillée, de 0,5 % d'acide formique et de 0,5 % d'ammonium quaternaire, soit par un mélange composé de 32 à 50 % de glycerol stabilisé, de 67 à 49 % d'eau distillée, de 0,5 % d'acide formique et de 0,5 % d'ammonium quaternaire, soit de paraffine

0109377

- 9 -

pure en huile, ou d'huile de silicone pure, ou encore d'un mélange composé d'environ 84 % d'eau distillée, de 14 % d'acide citrique, de 1 % d'ammonium quaternaire, et de 1 % d'acide formique.

5. Capteur selon la revendication 4, caractérisé en ce que le liquide est transparent, coloré ou encore rendu opaque.

6. Capteur selon l'une quelconque des revendications 1 à 5, caractérisé en ce qu'il est mis seul ou conjointement avec d'autres dans une cuve (8) immergée d'eau (9) ou autre liquide ou gaz porteur, cuve (7) comportant une tuyauterie d'amenée (10) de l'eau, liquide ou gaz à réchauffer et une tuyauterie de sortie (11) de l'eau, liquide ou gaz réchauffé.

7. Capteur selon l'une quelconque des revendications 1 à 6, caractérisé en ce que l'encadrement (4) est complété ou remplacé par un joint hermétique.

Fig 1

Fig 2

Fig 3

Fig 4